(19) **Europäisches Patentamt / European Patent Office / Office européen des brevets**

(11) **EP 4 723 273 A1**

(12) # EUROPEAN PATENT APPLICATION

(43) Date of publication:
08.04.2026 Bulletin 2026/15

(21) Application number: 25201664.7

(22) Date of filing: 11.09.2025

(51) International Patent Classification (IPC):
$H01M\ 10/0525\ ^{(2010.01)}$ $H01M\ 4/485\ ^{(2010.01)}$
$H01M\ 10/052\ ^{(2010.01)}$ $H01M\ 4/58\ ^{(2010.01)}$
$H01M\ 4/02\ ^{(2006.01)}$ $C01B\ 25/45\ ^{(2006.01)}$
$C01F\ 5/00\ ^{(2006.01)}$ $C01G\ 25/00\ ^{(2006.01)}$
$C01D\ 15/00\ ^{(2006.01)}$

(52) Cooperative Patent Classification (CPC):
H01M 4/5825; C01B 25/45; C01D 15/00;
C01F 5/00; C01G 25/006; H01M 4/485;
H01M 10/052; C01P 2004/50; C01P 2004/64;
C01P 2006/12; H01M 2004/029

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 07.10.2024 JP 2024175765

(71) Applicant: **TOYOTA JIDOSHA KABUSHIKI KAISHA**
**Toyota-shi, Aichi-ken 471-8571 (JP)**

(72) Inventors:
• **KOSAKA, Daichi**
**Toyota-shi, 471-8571 (JP)**
• **EGUCHI, Tatsuya**
**Kariya-shi, 448-8671 (JP)**
• **KIMIJIMA, Takeshi**
**Kariya-shi, 448-8671 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POSITIVE ELECTRODE ACTIVE MATERIAL, BATTERY, AND METHOD OF PRODUCING POSITIVE ELECTRODE ACTIVE MATERIAL**

(57) A positive electrode active material comprises secondary particles, wherein each of the secondary particles includes primary particles, and each of the primary particles includes an olivine-type phosphate compound and lithium zirconate.

FIG.1

EP 4 723 273 A1

**Description**

CROSS REFERENCE TO RELATED APPLICATIONS

This nonprovisional application is based on Japanese Patent Application No. 2024-175765 filed on October 7, 2024, with the Japan Patent Office, the entire contents of which are hereby incorporated by reference.

BACKGROUND

Field

The present disclosure relates to a positive electrode active material, a battery, and a method of producing a positive electrode active material.

Description of the Background Art

Japanese National Patent Publication No. 2022-522559 discloses coating the surface of positive electrode active material particles including lithium iron phosphate (LFP) with zirconium oxide and/or the like.

SUMMARY

As a positive electrode active material, olivine-type phosphate compounds such as LFP are in practical use. When an olivine-type phosphate compound is used in a liquid-type battery, it can react with the liquid electrolyte to produce gas. Due to the gas production, problems such as cycling performance degradation may occur, for example. Japanese National Patent Publication No. 2022-522559, by using positive electrode active material particles with the above-mentioned characteristics, intends to reduce gas production, in an attempt to enhance cycling performance. However, there is still room for improvement in cycling performance.
An object of the present disclosure is to improve cycling performance.
Hereinafter, the technical configuration and effects of the present disclosure will be described. It should be noted that the action mechanism according to the present disclosure includes presumption. The action mechanism does not limit the technical scope of the present disclosure.

[1] A positive electrode active material comprising:

secondary particles, wherein
each of the secondary particles includes primary particles, and
each of the primary particles includes an olivine-type phosphate compound and lithium zirconate.

When an olivine-type phosphate compound is included as a positive electrode active material, and if lithium zirconate ($Li_2ZrO_3$) is further included, gas production due to reactions of the olivine-type phosphate compound with liquid electrolyte is reduced and, as a result, cycling performance is expected to be improved.
[2] The positive electrode active material according to [1], wherein a relationship of $0.001 \leq I_1/I_0$ is satisfied, where

$I_0$ represents a height of a main peak among all peaks attributable to an olivine-type structure in an XRD profile of the positive electrode active material, and
$I_1$ represents a height of a peak attributable to lithium zirconate in the XRD profile of the positive electrode active material.

[3] The positive electrode active material according to [2], wherein a relationship of $I_2/I_0 < 0.01$ is satisfied, where $I_2$ represents a height of a peak attributable to zirconia in the XRD profile of the positive electrode active material.
[4] The positive electrode active material according to any one of [1] to [3], wherein zirconium is included in a mass fraction from 0.1% to 0.8%.
[5] The positive electrode active material according to any one of [1] to [4], wherein an average particle size of the primary particles is from 20 nm to 90 nm.
[6] The positive electrode active material according to any one of [1] to [5], wherein a BET specific surface area of the positive electrode active material is from 14 $m^2/g$ to 26 $m^2/g$.
[7] The positive electrode active material according to any one of [1] to [6], wherein the olivine-type phosphate compound is lithium manganese iron phosphate.

[8] A battery comprising the positive electrode active material according to any one of [1] to [7].

[9] The battery according to [8], having a bipolar structure.

[10] A method of producing a positive electrode active material, the method comprising:

(a) wet grinding a manganese carbonate aqueous solution in a vacuum to form a first slurry, where the manganese carbonate aqueous solution is obtained by bubbling carbon dioxide into an aqueous solution obtained by mixing a manganese compound and a first solvent;

(b) wet grinding a mixture of a second slurry, the first slurry, and a phosphate compound, in a vacuum to form a third slurry, where the second slurry is obtained by mixing a first lithium compound and a second solvent;

(c) stirring the third slurry while bubbling carbon dioxide thereinto to form a fourth slurry;

(d) forming first precursor particles by spray pyrolysis of the fourth slurry;

(e) performing hydrothermal treatment of a fifth slurry to form second precursor particles, where the fifth slurry is obtained by mixing the first precursor particles, a second lithium compound, and a third solvent;

(f) forming third precursor particles by spray pyrolysis of the second precursor particles; and

(g) performing heat treatment of the third precursor particles to produce an olivine-type phosphate compound,

wherein at least one of the following is satisfied:

(1) in the (a), wet grinding is carried out with a bead mill using zirconium-containing beads;

(2) in the (b), wet grinding is carried out with a bead mill using zirconium-containing beads; and

(3) in the (b), the second slurry is obtained by further mixing zirconium.

With the conditions in the steps in [10] above being properly controlled, the positive electrode active material according to [1] above is expected to be produced.

[11] The method of producing a positive electrode active material according to [10], wherein

the (a) is carried out with a circulation mill,

the circulation mill comprises a tank for carbon dioxide bubbling and a grinding chamber, and

the aqueous solution containing the manganese compound circulates between inside the tank and inside the grinding chamber and thereby carbon dioxide bubbling and wet grinding are repeatedly carried out.

In the following, an embodiment of the present disclosure (which may be simply called "the present embodiment" hereinafter) and an example of the present disclosure (which may be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating a secondary particle according to the present embodiment.

Fig. 2 is a schematic flowchart illustrating a method of producing a positive electrode active material according to the present embodiment.

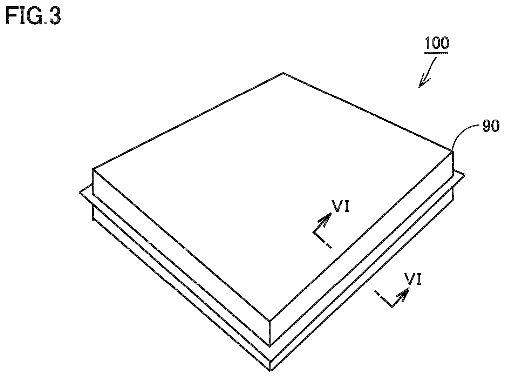

Fig. 3 is a schematic perspective view illustrating a battery according to the present embodiment.

Fig. 4 is a schematic view of a cross section cut along the line VI-VI in Fig. 3.

Fig. 5 is a table showing conditions for producing positive electrode active materials of Nos. 1 to 12 in Examples.

Fig. 6 is a table showing experiment results of Nos. 1 to 12 in Examples.

Fig. 7 is a table showing conditions for producing positive electrode active materials of Nos. 13 and 14 in Examples.

Fig. 8 is a table showing experiment results of Nos. 13 and 14 in Examples.

Fig. 9 is a temperature profile during calcination.

DESCRIPTION OF THE PREFERRED EMBODIMENTS

<Terms and Phrases>

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

Expressions such as "first" and "second" are used solely for differentiating a plurality of elements from each other. Such expressions do not limit the scope of these elements. For example, these expressions are independent of the order and the significance of these elements.

For example, the expression "at least one of A and B" includes "A or B" and "A and B". "At least one of A and B" may also be expressed as "A and/or B".

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

A singular form may also include its plural meaning, unless otherwise specified. For example, a particle may mean a plurality of particles, a group of particles, and a powdery and granular material.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Each of "not less than" and "not more than" is represented by an inequality symbol with an equality symbol, e.g., "$\leq$, $\geq$". Each of "more than" and "less than" is represented by an inequality symbol without an equality symbol, e.g., "<, >". Any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values is merely an example. It is possible to use a product similar to the apparatus and/or the like presented as an example. When a similar product is used, the measurement conditions may be adjusted to be suitable for the apparatus.

$I_0$, $I_1$, and $I_2$ are measured by X-ray diffraction (XRD) measurement of the powder. XRD measurement conditions are as described below, for example.

Analysis method: Wide-angle method
Measurement apparatus: Smart Lab II (manufactured by Rigaku)
Measurement angle ($2\theta$): 10 to 70°
Vacuum tube: $CuK\alpha$ (wavelength, 1.540598 Å)
Tube voltage: 45 kV
Tube current: 200 mA
Measurement method: Continuous method
Step: 0.02°

Rate: 10°/minute
RS: 20 mm
Detection mode: One-dimensional

In an XRD profile, a diffraction peak for a (311) plane attributable to an olivine-type structure may be detected at or near "$2\theta=35°$". A diffraction peak for a (400) plane attributable to $Li_2ZrO_3$ may be detected at or near "$2\theta=40°$". The diffraction peak for a (101) plane attributable to zirconia ($ZrO_2$) may be detected at or near "$2\theta=30°$". The diffraction intensity ($I_0$, $I_1$, $I_2$) of the peaks is measured. $I_1$ is divided by $I_0$ to determine $I_1/I_0$, and $I_2$ is divided by $I_0$ to determine $I_2/I_0$.

The amount of zirconium (Zr) included in a positive electrode active material may be measured by inductively coupled plasma atomic emission spectroscopy (ICP-AES). The positive electrode active material in an amount of 0.1 g is mixed in hydrochloric acid (6 mol/L) and heated (a first mixture). After left to cool, the resultant is filtrated to separate the insoluble component, followed by further mixing boric acid and sodium carbonate and heating. After left to cool, the melted product is ground and mixed in hydrochloric acid (a second mixture). The first mixture and the second mixture are mixed together to prepare a sample solution. The sample solution is diluted to a proper concentration with the use of a volumetric flask. After dilution, composition analysis is carried out with an ICP-AES apparatus. For example, a product under the trade name "PS3520 UVDD II (manufactured by Hitachi High-Tech Science)" and/or the like may be used.

The chemical composition of a compound may also be measured by ICP-AES. The positive electrode active material in an amount of 0.1 g is dissolved in a mixed acid (10 ml) of hydrochloric acid and sulfuric acid to prepare a sample solution. The sample solution is diluted to a proper concentration with the use of a volumetric flask. After dilution, composition analysis is carried out with an ICP-AES apparatus.

A stoichiometric composition formula represents a typical example of a compound. A compound may have a non-stoichiometric composition. For example, "$Al_2O_3$" is not limited to a compound where the ratio in amount of substance (the molar ratio) is "Al/O=2/3". "$Al_2O_3$" represents a compound that includes Al and O in any ratio in amount of substance, unless otherwise specified. For example, the compound may be doped with a trace element. Some of Al and/or O may be replaced by another element.

The average particle size (D50) of primary particles may be measured by a small angle X-ray scattering (SAXS) method. The conditions of SAXS measurement are as described below, for example.

Measurement apparatus: NANOPIX mini
Measurement angle: -0.01 to 0.8°
Vacuum tube: CuK$\alpha$ (wavelength, 1.540598 Å)
Tube voltage: 45 kV
Tube current: 200 mA
Measurement method: Continuous method
Step: 0.0004°
Rate: 0.06°/minute

The scattering pattern obtained by SAXS measurement is subjected to fitting with software (MR SAXS), and based on the hypothesis that the primary particles are spheres with various particle sizes, the D50 of the primary particles is determined.

"D50" refers to a particle size in volume-based particle size distribution (cumulative distribution) at which the cumulative value reaches 50%. D50 (except the D50 of the primary particles) is measured with a laser-diffraction particle size distribution analyzer, for example.

The BET specific surface area of the positive electrode active material may be measured by a BET multi-point method. The positive electrode active material is vacuum dried at 120°C for 5 hours. A nitrogen adsorption analyzer (Autosorb (manufactured by Quantachrome)) is used to measure the amount of nitrogen adsorption at the boiling point of liquid nitrogen (-195.8°C) to obtain a nitrogen absorption isotherm. Based on the nitrogen absorption isotherm, by a BET multi-point method, the BET specific surface area of the positive electrode active material is calculated.

The "maximum Feret diameter" of a secondary particle refers to the length of the long side of a circumscribing rectangular (an oblong or a square) that circumscribes the particle. When the circumscribing rectangular is square, the length of the long side refers to the length of a side.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

<Positive Electrode Active Material>

A positive electrode active material may have any configuration. The positive electrode active material may be a powdery and granular material, for example. The D50 of the positive electrode active material may be 1 $\mu$m or more, or 2.5 $\mu$m or more, or 5 $\mu$m or more, or 7.5 $\mu$m or more, or 10 $\mu$m or more, or 15 $\mu$m or more, or 20 $\mu$m or more, for example. The D50 of the positive electrode active material may be 50 $\mu$m or less, or 40 $\mu$m or less, or 30 $\mu$m or less, or 20 $\mu$m or less, or 15 $\mu$m or less, for example.

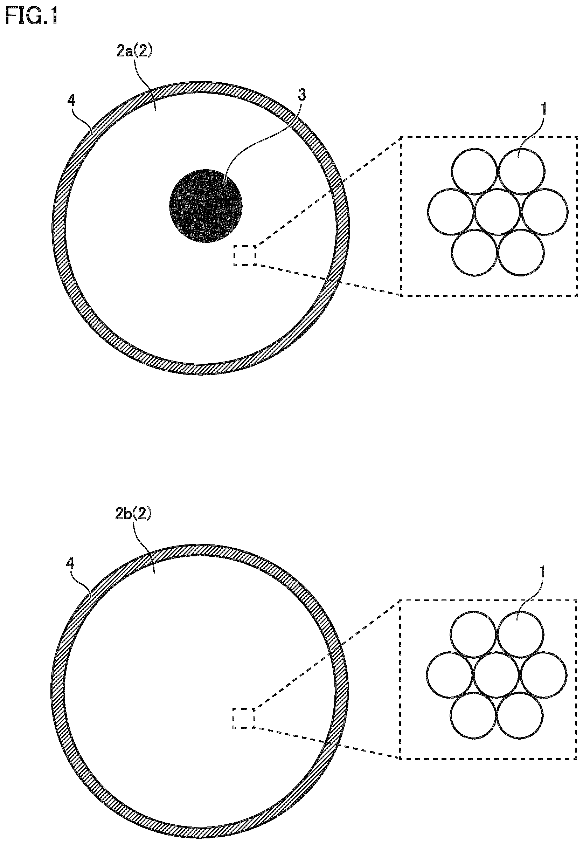

Fig. 1 is a conceptual view illustrating a secondary particle according to the present embodiment. The positive electrode active material includes a plurality of secondary particles 2. Secondary particle 2 is a group of primary particles 1. In other words, secondary particle 2 includes a plurality of primary particles 1.

Secondary particles 2 may include open-pore particles 2a and non-open-pore particles 2b. Open-pore particle 2a is a secondary particle having an open pore 3. Non-open-pore particle 2b is a secondary particle that does not have open pore 3. The presence or absence of open pore 3 is determined in a scanning electron microscope (SEM) image. Although non-open-pore particle 2b may have open pore 3 at a position that is invisible in an SEM image, determination of the presence or absence of open pore 3 is based on the appearance in an SEM image.

The maximum Feret diameter of secondary particle 2 may be 1 $\mu$m or more, or 2.5 $\mu$m or more, or 5 $\mu$m or more, or 7.5 $\mu$m or more, or 10 $\mu$m or more, or 15 $\mu$m or more, or 20 $\mu$m or more, for example. The maximum Feret diameter of secondary particle 2 may be 50 $\mu$m or less, or 40 $\mu$m or less, or 30 $\mu$m or less, or 20 $\mu$m or less, or 15 $\mu$m or less, for example.

Secondary particle 2 may have a spherical outer shape. When secondary particle 2 is spherical, packing properties are expected to be enhanced, for example. The sphericity of secondary particle 2 may be 0.85 or more, or 0.90 or more, or 0.95 or more. The sphericity of secondary particle 2 may be 1 or less, or 0.95 or less, or 0.90 or less, for example. "Sphericity" refers to the circularity in a surface SEM image (a two-dimensional image). The sphericity (circularity) is determined by the following equation.

$$\psi = 4\pi S / L^2$$

$\psi$: Sphericity (circularity)
$\pi$: Circular constant
S: Cross-sectional area of secondary particle 2 (the area of a region surrounded by the contour of secondary particle 2)
L: Perimeter of secondary particle 2 (the length of the contour of secondary particle 2)

The sphericity refers to the arithmetic mean of 30 secondary particles 2. The sphericity of 30 secondary particles 2 is measured regardless of the presence or absence of open pore 3.

To the surface of secondary particle 2, a carbon layer 4 may be adhered. Carbon layer 4 includes carbon (C). The amount of adhered carbon layer 4 in mass fraction relative to secondary particle 2 may be 0. 1% or more, or 0.5% or more, or 1% or more, or 2% or more, or 3% or more, or 4% or more, for example. The amount of adhered carbon layer 4 in mass fraction relative to secondary particle 2 may be 5% or less, or 4% or less, or 3% or less, for example.

Each of primary particles 1 includes an olivine-type phosphate compound and $Li_2ZrO_3$. When an olivine-type phosphate compound is included as a positive electrode active material, and if $Li_2ZrO_3$ is further included, gas production due to reactions of the olivine-type phosphate compound with liquid electrolyte is reduced and, as a result, cycling performance is expected to be improved.

$Li_2ZrO_3$ may be adhered to the surface of the olivine-type phosphate compound, or may be included inside the olivine-type phosphate compound.

Here, "olivine-type" refers to a crystal structure belonging to the space group Pnma (an olivine-type structure). The space group is identified by X-ray diffraction (XRD) measurement of the powder. Primary particle 1 may be a single-phase compound, for example. As long as it includes an olivine-type crystalline phase, primary particle 1 may further include a phase that belongs to another space group. Primary particle 1 may further include an amorphous phase and/or the like, for example.

The olivine-type phosphate compound may include LFP, LMP, and/or the like, for example. In LMP, part of manganese (Mn) may be replaced by iron (Fe). Fe-replaced LMP is also called LMFP. LMP may have a composition represented by the following general formula, for example.

$$Li_{1-a}Mn_{1-x}Fe_xPO_4$$

For example, the relationship of $-0.5 \le a \le 0.5$ may be satisfied. The Fe-replacing amount (x) may be 0 or more, or 0.05 or more, or 0.1 or more, or 0.2 or more, or 0.3 or more, or 0.4 or more, or 0.5 or more, or 0.6 or more, or 0.7 or more, or 0.8 or more, or 0.9 or more, for example. The Fe-replacing amount (x) may be 0.9 or less, or 0.8 or less, or 0.7 or less, or 0.6 or less, or 0.5 or less, or 0.4 or less, or 0.3 or less, or 0.2 or less, or 0.1 or less, for example.

The LMFP may be doped with an element (a dopant) other than lithium (Li), Mn, Fe, phosphorus (P), and oxygen (O). The doping amount (the fraction in amount of substance relative to the amount of substance of Li) may be from 0.01 to 0.1, for example. The dopant may include at least one selected from the group consisting of boron (B), nitrogen (N), a halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and an actinoid, for example.

The positive electrode active material may further include another component as long as it includes an olivine-type phosphate compound. This another component may include lithium-nickel composite oxide (LNO), lithium-cobalt composite oxide (LCO), lithium-manganese composite oxide (LMO), and/or the like, for example. The mixing ratio (in mass) between the olivine-type phosphate compound and the another component may be "(olivine-type phosphate compound)/(another component)=9/1 to 1/9", or "(olivine-type phosphate compound)/(another component)=8/2 to 2/8", or "(olivine-type phosphate compound)/(another component)=7/3 to 3/7", or "(olivine-type phosphate compound)/(another component)=6/4 to 4/6", for example.

The LNO may have a crystal structure belonging to the space group R-3m, for example. The LNO may have a composition represented by the following general formula, for example.

$$Li_{1-a}Ni_XM_{1-X}O_2$$

In the formula, the relationships of $-0.5 \le a \le 0.5$, $0 \le x \le 1$ are satisfied. M may include, for example, at least one selected from the group consisting of Co, Mn, and Al. For example, the relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x \le 1$ may be satisfied. For example, the relationship of $-0.4 \le a \le 0.4$, $-0.3 \le a \le 0.3$, $-0.2 \le a \le 0.2$, or $-0.1 \le a \le 0.1$ may be satisfied.

The LNO may include at least one selected from the group consisting of $LiNi_{0.9}Co_{0.1}O_2$, $LiNi_{0.9}Mn_{0.1}O_2$, and $LiNiO_2$, for example.

The LNO may be represented by the following general formula, for example. A compound represented by the following general formula may also be called "NCM".

$$Li_{1-a}Ni_xCo_yMn_zO_2$$

In the formula, the relationships of $-0.5 \le a \le 0.5$, $0 < x < 1$, $0 < y < 1$, $0 < z < 1$, $x+y+z=1$ are satisfied. For example, the relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x < 1$ may be satisfied. For example, the relationship of $0 < y \le 0.1$, $0.1 \le y \le 0.2$, $0.2 \le y \le 0.3$, $0.3 \le y \le 0.4$, $0.4 \le y \le 0.5$, $0.5 \le y \le 0.6$, $0.6 \le y \le 0.7$, $0.7 \le y \le 0.8$, $0.8 \le y \le 0.9$, or $0.9 \le y < 1$ may be satisfied. For example, the relationship of $0 < z \le 0.1$, $0.1 \le z \le 0.2$, $0.2 \le z \le 0.3$, $0.3 \le z \le 0.4$, $0.4 \le z \le 0.5$, $0.5 \le z \le 0.6$, $0.6 \le z \le 0.7$, $0.7 \le z \le 0.8$, $0.8 \le z \le 0.9$, or $0.9 \le z < 1$ may be satisfied.

NCM may include at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$, for example.

The LNO may be represented by the following general formula, for example. A compound represented by the following general formula may also be called "NCA".

$$Li_{1-a}Ni_xCo_yAl_zO_2$$

In the formula, the relationships of $-0.5 \le a \le 0.5$, $0 < x < 1$, $0 < y < 1$, $0 < z < 1$, $x+y+z=1$ are satisfied. For example, the relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x < 1$ may be satisfied. For example, the relationship of $0 < y \le 0.1$, $0.1 \le y \le 0.2$, $0.2 \le y \le 0.3$, $0.3 \le y \le 0.4$, $0.4 \le y \le 0.5$, $0.5 \le y \le 0.6$, $0.6 \le y \le 0.7$, $0.7 \le y \le 0.8$, $0.8 \le y \le 0.9$, or $0.9 \le y < 1$ may be satisfied. For example, the relationship of $0 < z \le 0.1$,

$0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCA may include at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$, for example.

The positive electrode active material may satisfy the relationship represented by the following expression.

$$0.001 \leq I_1/I_0$$

$I_0$ represents the height of a main peak among all the peaks attributable to an olivine-type structure in an XRD profile of the positive electrode active material, and $I_1$ represents the height of a peak attributable to $Li_2ZrO_3$ in the XRD profile of the positive electrode active material. When the relationship of the above expression is satisfied, cycling performance is expected to be further improved. $I_1/I_0$ may be 0.002 or more, or 0.004 or more. $I_1/I_0$ may be 0.010 or less, or 0.005 or less.

The positive electrode active material may satisfy the relationship represented by the following expression.

$$I_2/I_0 < 0.01$$

$I_2$ represents the height of a peak attributable to zirconia ($ZrO_2$) in the XRD profile of the positive electrode active material. When the relationship of the above expression is satisfied, cycling performance is expected to be further improved. $I_2/I_0$ may be 0.007 or less, or 0.005 or less. $I_2/I_0$ may be 0, or 0.002 or more.

The positive electrode active material may include Zr in a mass fraction from 0.1% to 0.8%. When the positive electrode active material includes Zr in a certain proportion, cycling performance is expected to be further improved. The positive electrode active material may include Zr in a mass fraction of 0.2% or more, or 0.3% or more, or 0.4% or more. The positive electrode active material may include Zr in a mass fraction of 0.7% or less, or 0.6% or less, or 0.5% or less. When it is said that the positive electrode active material includes Zr, the Zr means not only the elemental Zr but also a zirconium-containing compound such as $Li_2ZrO_3$ and/or $ZrO_2$.

The D50 of the primary particles may be from 20 nm to 90 nm. When the D50 of the primary particles falls within the above-mentioned range, cycling performance is expected to be further improved. The D50 of the primary particles may be 25 nm or more, or 30 nm or more, or 35 nm or more, or 40 nm or more, or 45 nm or more. The D50 of the primary particles may be 85 nm or less, or 80 nm or less, or 75 nm or less, or 70 nm or less, or 65 nm or less, or 60 nm or less, or 55 nm or less, or 50 nm or less.

The BET specific surface area of the positive electrode active material may be from 14 m²/g to 26 m²/g. When the BET specific surface area of the positive electrode active material falls within the above-mentioned range, cycling performance is expected to be further improved. The BET specific surface area of the positive electrode active material may be 15 m²/g or more, or 16 m²/g or more, or 17 m²/g or more, or 18 m²/g or more, or 19 m²/g or more, or 20 m²/g or more. The BET specific surface area of the positive electrode active material may be 25 m²/g or less, or 24 m²/g or less, or 23 m²/g or less, or 22 m²/g or less, or 21 m²/g or less.

<Method of Producing Positive Electrode Active Material>

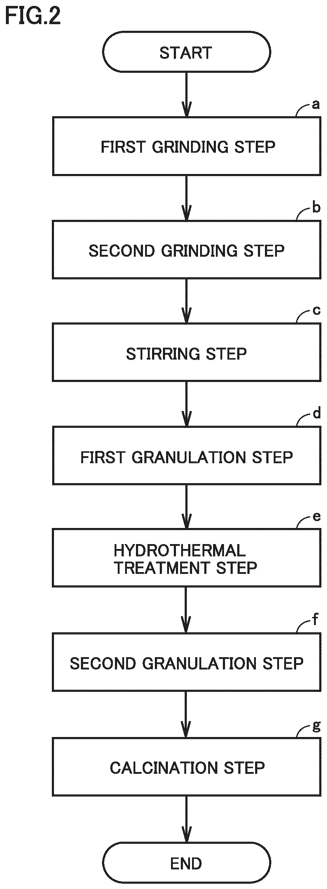

Fig. 2 is a schematic flowchart illustrating a method of producing a positive electrode active material according to the present embodiment. Hereinafter, "the method of producing a positive electrode active material according to the present embodiment" may be simply called "the present method". The present method may include "(a) a first grinding step", "(b) a second grinding step", "(c) a stirring step", "(d) a first granulation step", "(e) a hydrothermal treatment step", "(f) a second granulation step", and "(g) a calcination step", for example.

It should be noted that the raw materials may be prepared in advance in certain amounts. When the final product to produce is LMFP, a manganese compound, an iron compound, a phosphate compound, and a first lithium compound may be prepared in amounts that satisfy the composition ratio (in amount of substance) specified in the composition formula "$Li_{1-a}Mn_xFe_{1-x}PO_4$ ($-0.5 \leq a \leq 0.5$, $0 \leq x < 1$)". The manganese compound may include manganese sulfate, manganese nitrate, and/or the like, for example. The iron compound may include ferric phosphate, ferric hydroxide, and/or the like, for example. The phosphate compound may include phosphoric acid, lithium dihydrogen phosphate, and/or the like, for example. The first lithium compound may include lithium phosphate, lithium hydroxide, and/or the like, for example.

(a) First Grinding Step

This step involves wet grinding a manganese carbonate aqueous solution in a vacuum to form a first slurry, where the manganese carbonate aqueous solution is obtained by bubbling carbon dioxide ($CO_2$) into an aqueous solution obtained by mixing a manganese compound and a first solvent.

For example, the aqueous solution of a manganese compound is prepared by mixing the manganese compound and a first solvent. The first solvent may include water and/or the like, for example. The aqueous solution of the manganese compound is subjected to $CO_2$ bubbling. By this, the manganese compound in the aqueous solution becomes manganese carbonate. The resulting manganese carbonate aqueous solution is subjected to wet grinding in a vacuum, and thereby a first slurry is formed. Grinding may be carried out with a bead mill, a ball mill, a planetary mill, a jet mill, a planetary mixer, a homogenizer, and/or the like, for example. The vacuum may be created by deaeration with the use of a diaphragm pump, for example. It should be noted that $CO_2$ bubbling and grinding may be carried out separately. For example, it is possible to add the aqueous solution of the manganese compound into a tank to carry out $CO_2$ bubbling and then carry out grinding in a grinding chamber.

This step may be implemented with a circulation mill. The circulation mill comprises a tank for $CO_2$ bubbling and a grinding chamber. The tank and the grinding chamber are connected to each other by piping. For example, "LMZ015 (manufactured by Ashizawa Finetech)" (trade name) and/or the like may be used. The aqueous solution containing the manganese compound circulates between inside the tank and inside the grinding chamber, and thereby $CO_2$ bubbling and wet grinding are carried out repeatedly. As a result, a first slurry including manganese carbonate particles having a sharp particle size distribution is obtained.

This step may be carried out for 1 to 6 hours, for example.

The D50 of manganese carbonate in the first slurry may be from 0.10 to 0.50 $\mu$m, for example. The solid concentration of the first slurry in mass fraction may be from 20 to 40%, for example.

The amount of $CO_2$ supply into the tank may be, for example, from 0.1 to 1.0 L/minute per 1 L of the capacity of the tank. For avoiding $CO_2$ from entering into the grinding chamber, bubbling may be carried out with the tank hermetically sealed and with deaeration being performed using a diaphragm pump.

(b) Second Grinding Step

This step involves wet grinding a mixture of a second slurry, the first slurry, and a phosphate compound, in a vacuum to form a third slurry, where the second slurry is obtained by mixing a first lithium compound and a second solvent. When the final product to produce is LMFP, the second slurry may be obtained by further mixing an iron compound.

For example, it is possible to mix the second slurry and the first slurry and add the phosphate compound dropwise thereto with stirring. The second solvent may include water and/or the like, for example. The resulting mixed slurry is subjected to wet grinding in a vacuum, and thereby the third slurry is formed. Grinding may be carried out with a bead mill, a ball mill, a planetary mill, a jet mill, a planetary mixer, a homogenizer, and/or the like, for example. The vacuum may be created by deaeration with the use of a diaphragm pump, for example.

The D50 of the primary particles as well as the BET specific surface area of the positive electrode active material may be adjusted by changing the treatment time in this step. The treatment time in this step may affect the D50 of the primary particles, in particular. This step may be carried out for 0.5 to 3 hours, for example.

The D50 of the solid matter in the third slurry may be from 0.10 to 1 $\mu$m, for example. Each of the solid concentrations of the second slurry and the third slurry in mass fraction may be from 20 to 40%, for example.

The present method satisfies at least one of (1) to (3) below. As a result, in steps described below, $Li_2ZrO_3$ can be included in the positive electrode active material.

(1) In the step (a), wet grinding is carried out with a bead mill using Zr-containing beads.
(2) In the step (b), wet grinding is carried out with a bead mill using Zr-containing beads.
(3) In the step (b), the second slurry is obtained by further mixing Zr.

In the (1) and (2) above, the beads may be beads containing $ZrO_2$ as the Zr. In this case, the beads may include $ZrO_2$ in a mass fraction of 95% or more, for example. The diameter of the beads may be from 300 to 1000 $\mu$m, for example.

In the (3) above, as the Zr, $ZrO_2$ may be mixed. The amount of Zr to be added may be, for example, from 0.05 to 0.6% relative to the mass of the olivine-type phosphate compound (LMFP).

(c) Stirring Step

This step involves stirring the third slurry while bubbling $CO_2$ thereinto to form a fourth slurry.

As a result of $CO_2$ bubbling, carbonated water is produced in the third slurry. Due to the carbonated water thus produced, the raw material manganese compound (which is soluble in water) can be deposited as manganese carbonate and the yield can be increased. In addition, the target composition ratio of the olivine-type phosphate compound (LMFP) can be achieved. $CO_2$ bubbling may be carried out inside the tank, for example.

This step may be carried out for 1 hour or more, for example.

The BET specific surface area of the positive electrode active material may be adjusted by changing the solid concentration of the fourth slurry. The solid concentration of the fourth slurry in mass fraction may be from 20 to 25%, for example.

(d) First Granulation Step

This step involves forming (granulation) of first precursor particles by spray pyrolysis of the fourth slurry. The fourth slurry is subjected to a drying step and a pyrolysis step in this order.

For example, a spray pyrolysis apparatus may be used to perform spray pyrolysis of the fourth slurry. The spray pyrolysis apparatus comprises a drying furnace for implementing the drying step, and a pyrolysis furnace for implementing the pyrolysis step. For example, "ACP-U16-H5 (manufactured by ON General Electric)" (trade name) and/or the like may be used. The fourth slurry is sprayed, and dried in the drying furnace into powder. The resulting powder is treated in the pyrolysis furnace to become first precursor particles. The pyrolysis atmosphere may be an inert atmosphere, for example.

The D50 of the primary particles may be adjusted by changing the spray rate to spray the fourth slurry. The spray rate to spray the fourth slurry may be from 4 to 6 L/min, for example.

The D50 of the primary particles and the BET specific surface area of the positive electrode active material may be adjusted by adjusting the pyrolysis step (the pyrolysis furnace). The temperature in the pyrolysis furnace may be from 450 to 500°C, for example.

The temperature in the drying furnace may be from 200 to 400°C, for example.

(e) Hydrothermal Treatment Step

This step involves performing hydrothermal treatment of a fifth slurry to form second precursor particles, where the fifth slurry is obtained by mixing the first precursor particles, a second lithium compound, and a third solvent.

The second lithium compound may include lithium phosphate, lithium hydroxide, and/or the like, for example. The third solvent may include water and/or the like, for example. For example, an autoclave may be used to perform hydrothermal treatment of the fifth slurry. For example, "Jacketed Autoclave (manufactured by Nitto Koatsu)" (trade name) and/or the like may be used. By this step, $Li_2ZrO_3$ can be obtained.

The temperature of the hydrothermal treatment may be from 100 to 300°C, for example. The time of the hydrothermal treatment may be from 3 to 5 hours.

The solid concentration of the fifth slurry in mass fraction may be from 10 to 30%, for example. The amount of the second lithium compound to be added may be, for example, from 1 to 10% relative to the mass of the first precursor particles.

When it is intended to form a carbon layer on the surface of the olivine-type phosphate compound obtained in the present method, it is possible to further mix a carbon raw material to the fifth slurry to perform hydrothermal treatment.

The carbon raw material may include a sugar, an organic acid, and/or the like, for example. The carbon raw material may include glucose, sucrose, fructose, citric acid, and/or the like, for example. The amount of the carbon raw material to be added in mass fraction may be from 1 to 20%, for example.

(f) Second Granulation Step

This step involves forming third precursor particles by spray pyrolysis of the second precursor particles.

For example, the fifth slurry after the step (e) may be subjected to spray pyrolysis. The spray pyrolysis in this step may be performed under the same conditions as in the step (d), or may be performed under different conditions.

(g) Calcination Step

This step involves performing heat treatment (calcination) of the third precursor particles to produce an olivine-type phosphate compound.

Any heat treatment furnace (such as, for example, an electric furnace, a muffle furnace, and/or the like) may be used. The heat treatment atmosphere may be an inert atmosphere, for example. The heat treatment temperature may be from 400 to 700°C, for example. The heat treatment time may be from 4 to 6 hours, for example. During the temperature-raising process in the calcination, instead of continuously raising the temperature, it is possible to temporarily pause raising the temperature at or near 200°C and maintain the temperature (200°C) for about 1 hour.

<Battery>

In some present embodiments, the battery has a monopolar structure. In some present embodiments, the battery has a bipolar structure. As an example, a battery having a bipolar structure (a bipolar battery) will be described.

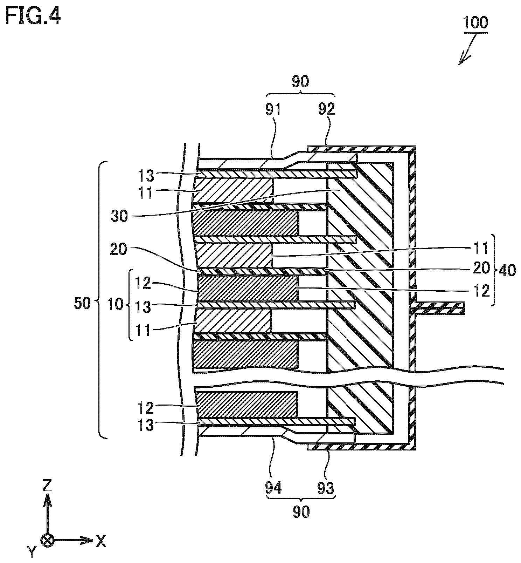

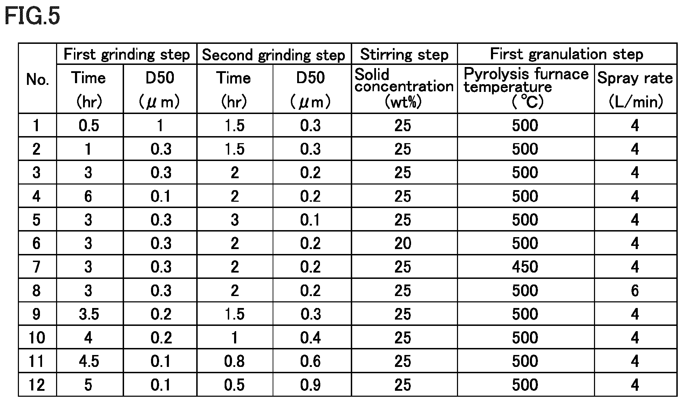

Fig. 4 is a schematic perspective view illustrating a battery according to the present embodiment. Fig. 5 is a schematic view of a cross section cut along the line VI-VI in Fig. 4. Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In Fig. 5, the Z-axis direction corresponds to the perpendicular-to-plane direction. Each of the X-axis direction and the Y-axis direction is an example of an in-plane direction.

A battery 100 includes an exterior package 90 and a power generation element 50. Exterior package 90 accommodates power generation element 50. Exterior package 90 may include a first current collector plate 91, a first laminated film 92, a second laminated film 93, and a second current collector plate 94, for example. First laminated film 92 and second laminated film 93 are joined to each other at an end in an in-plane direction. At the joint portion between first laminated film 92 and second laminated film 93, a sealing material (not illustrated) may be interposed between first laminated film 92 and second laminated film 93.

At the ends in the stacking direction (the Z-axis direction), first current collector plate 91 and second current collector plate 94 are joined to power generation element 50, respectively. First laminated film 92 is joined to first current collector plate 91. Second laminated film 93 is joined to second current collector plate 94. At the joint portion between the current collector plate and the laminated film, a sealing material (not illustrated) may be interposed between the current collector plate and the laminated film.

Power generation element 50 includes a plurality of bipolar electrodes 10. Bipolar electrodes 10 are stacked in the perpendicular-to-plane direction (the Z-axis direction). In the perpendicular-to-plane direction, each bipolar electrode 10 includes a positive electrode layer 11, a current-collecting foil sheet 13, and a negative electrode layer 12 in this order. In an in-plane direction (for example, the X-axis direction), current-collecting foil sheet 13 extends outwardly beyond positive electrode layer 11 and negative electrode layer 12. For example, current-collecting foil sheet 13 may extend outwardly beyond positive electrode layer 11 and negative electrode layer 12 for the entire periphery in an in-plane direction.

Current-collecting foil sheet 13 is a conductor. For example, current-collecting foil sheet 13 may include a metal foil sheet, an electrically-conductive resin layer, and/or the like. For example, current-collecting foil sheet 13 may be formed by bonding an Al foil sheet and a Cu foil sheet together. A surface of current-collecting foil sheet 13 may have a carbon material applied thereto. The carbon material may include carbon black and/or the like, for example.

Power generation element 50 includes a sealing material 30. At an end in an in-plane direction, sealing material 30 is attached to current-collecting foil sheet 13. For example, sealing material 30 may be heat-sealed to current-collecting foil sheet 13. For example, sealing material 30 may be provided along the entire periphery in an in-plane direction. Sealing material 30 may include a resin material and/or the like, for example. Sealing material 30 seals interstices between current-collecting foil sheets 13 that are adjacent to each other in the perpendicular-to-plane direction. The interstices between current-collecting foil sheets 13 are thus sealed with sealing material 30, and thereby cells 40 are formed. A cell 40 is the smallest constituent unit of power generation element 50. Because it includes a plurality of cells 40, battery 100 may also be referred to as "a bipolar module". Each of cells 40 is hermetically sealed. Cells 40 are segregated from each other. Each of cells 40 includes positive electrode layer 11, a separator 20, negative electrode layer 12, and an electrolyte solution.

(Positive Electrode Layer)

Positive electrode layer 11 is adhered to one side of current-collecting foil sheet 13. For example, a groove may be formed in positive electrode layer 11. Positive electrode layer 11 may be formed in stripes, for example. Positive electrode layer 11 includes a positive electrode active material. That is, the electrode includes a positive electrode active material. The details of the positive electrode active material are as described above.

In addition to the positive electrode active material, positive electrode layer 11 may further include a conductive material, a binder, and the like, for example. The amount of the conductive material to be used may be, for example, from 0.1 to 10 parts by mass relative to 100 parts by mass of the positive electrode active material. The conductive material may include any component. The conductive material may include at least one selected from the group consisting of graphite, acetylene black (AB), Ketjenblack (registered trademark), vapor grown carbon fibers (VGCFs), carbon nanotubes (CNTs), and graphene flakes (GFs), for example.

The amount of the binder to be used may be, for example, from 0.1 to 10 parts by mass relative to 100 parts by mass of the positive electrode active material. The binder may include any component. The binder may include at least one selected from the group consisting of polyvinylidene difluoride (PVdF), vinylidene difluoride-hexafluoropropylene copolymer (PVdF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, and derivatives of these, for example.

Positive electrode layer 11 may further include an inorganic filler, an organic filler, a solid electrolyte, a surface modifier, a dispersant, a lubricant, a flame retardant, a protective agent, a flux, a coupling agent, an adsorbent, and/or the like, for example. Positive electrode layer 11 may include polyoxyethylene allylphenyl ether phosphate, zeolite, silane coupling agent, $MoS_2$, $WO_3$, and/or the like, for example.

(Negative Electrode Layer)

Negative electrode layer 12 is adhered to one side of current-collecting foil sheet 13. Negative electrode layer 12 is positioned on the opposite side to the side on which positive electrode layer 11 is positioned. The area of negative electrode layer 12 may be greater than that of positive electrode layer 11. Negative electrode layer 12 includes a negative electrode active material.

The negative electrode active material may be in particle form, or may be in sheet form, for example. The D50 of the negative electrode active material may be 1 μm or more, or 5 μm or more, or 10 μm or more, for example. The D50 of the negative electrode active material may be 30 μm or less, or 20 μm or less, or 15 μm or less, or 10 μm or less, for example.

The negative electrode active material may include any component. The negative electrode active material may include at least one selected from the group consisting of carbon-based active material, alloy-based active material, Si-C composite material, Li metal, Li-based alloy, and lithium titanate, for example. In some present embodiments, the battery may be a Li-metal negative electrode battery.

The carbon-based active material may include at least one selected from the group consisting of graphite, soft carbon, and hard carbon, for example. The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The surface of the graphite may be covered with amorphous carbon, for example. The surface of the graphite may be covered with another type of material, for example. This another type of material may include at least one selected from the group consisting of P, W, Al, and O, for example. The another type of material may include at least one selected from the group consisting of $Al(OH)_3$, AlOOH, $Al_2O_3$, $WO_3$, $Li_2CO_3$, $LiHCO_3$, and $Li_3PO_4$, for example.

The alloy-based active material may include at least one selected from the group consisting of Si, Li silicate, SiO, Si-based alloy, tin (Sn), SnO, and Sn-based alloy, for example.

SiO may be represented by the following general formula, for example. $SiO_x$

In the formula, the relationship of $0<x<2$ is satisfied. For example, the relationship of $0.5 \leq x \leq 1.5$ or $0.8 \leq x \leq 1.2$ may be satisfied.

"Si-C composite material" refers to a composite material composed of a carbon-based active material (such as graphite) and an alloy-based active material (such as Si). For example, Si microparticles may be dispersed inside carbon particles. For example, Si microparticles may be dispersed inside graphite particles. For example, Li silicate particles may be covered with a carbon material (such as amorphous carbon).

(Separator)

Separator 20 is capable of separating positive electrode layer 11 from negative electrode layer 12. Separator 20 is electrically insulating. Separator 20 may include at least one selected from the group consisting of a resin film (a polymer film), an inorganic particle layer, and an organic particle layer, for example. Separator 20 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The resin film may have an average pore size of 1 μm or less, for example. The resin film may have an average pore size from 0.01 to 1 μm, or from 0.1 to 0.5 μm, for example. "Average pore size" may be measured by mercury porosimetry. The resin film may have a Gurley value from 50 to 250 s/100cm$^3$, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of polyethylene (PE), polypropylene (PP), polyamide (PA), polyamide-imide (PAI), polyimide (PI), aromatic polyamide (aramid), polyphenylene ether (PPE), and derivatives of these, for example. The resin film may be formed by stretching, phase separation, and/or the like, for example. The resin film may have a thickness from 5 to 50 μm, or from 10 to 25 μm, for example.

The resin film may have a monolayer structure. The resin film may be made of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 μm, for example. The thickness of the PP layer may be from 3 to 10 μm, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode layer 11, or may be formed on the side facing the negative electrode layer 12. The inorganic particle layer may be formed on the surface of positive electrode layer 11, or may be formed on the surface of negative electrode layer 12.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

Separator 20 may include an organic particle layer, for example. Separator 20 may include an organic particle layer instead of the resin film, for example. Separator 20 may include an organic particle layer instead of the inorganic particle layer, for example. Separator 20 may include both the resin film and an organic particle layer. Separator 20 may include both the inorganic particle layer and an organic particle layer. Separator 20 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 20 may include a mixed layer, for example. The mixed layer includes both inorganic particles and organic particles.

(Electrolyte Solution)

The electrolyte solution is a liquid electrolyte. The electrolyte solution includes a solute and a solvent. The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these, for example.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation, for example.

$$V_{EC}+V_{FEC}+V_{EMC}+V_{DMC}+V_{DEC}=10$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The relationships of $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$ are satisfied.

For example, the relationship of $1 \leq V_{EC} \leq 2$ or $2 \leq V_{EC} \leq 3$ may be satisfied.

For example, the relationship of $1 \leq V_{FEC} \leq 2$ or $2 \leq V_{FEC} \leq 4$ may be satisfied.

For example, the relationship of $3 \leq V_{EMC} \leq 4$ or $6 \leq V_{EMC} \leq 8$ may be satisfied.

For example, the relationship of $3 \leq V_{DMC} \leq 4$ or $6 \leq V_{DMC} \leq 8$ may be satisfied.

For example, the relationship of $3 \leq V_{DEC} \leq 4$ or $6 \leq V_{DEC} \leq 8$ may be satisfied.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

The electrolyte solution may include an ether-based solvent. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as a trace component (an additive). The additive may include at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these, for example.

The electrolyte solution may include an ionic liquid. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

In some present embodiments, the battery may include a gelled electrolyte. In other words, the battery may be a polymer battery. The gelled electrolyte may include an electrolyte solution and a polymer material. The polymer material may form a polymer matrix. The polymer material may include at least one selected from the group consisting of PVdF, PVdF-HFP, polyacrylonitrile (PAN), PVdF-PAN, polyethylene oxide (PEO), polyethylene glycol (PEG), and derivatives of these, for example.

[Examples]

<Test Example 1>

<Production of Positive Electrode Active Material>

(No. 1)

Lithium phosphate, manganese sulfate pentahydrate, ferric phosphate, and 85% phosphoric acid aqueous solution were prepared in amounts that satisfied the composition ratio specified in the composition formula "$Li_{1.04}Mn_{0.6}Fe_{0.4}PO_4$". Glucose was prepared in an amount of 8% in mass fraction relative to the total mass of the raw materials.

(a) First Grinding Step

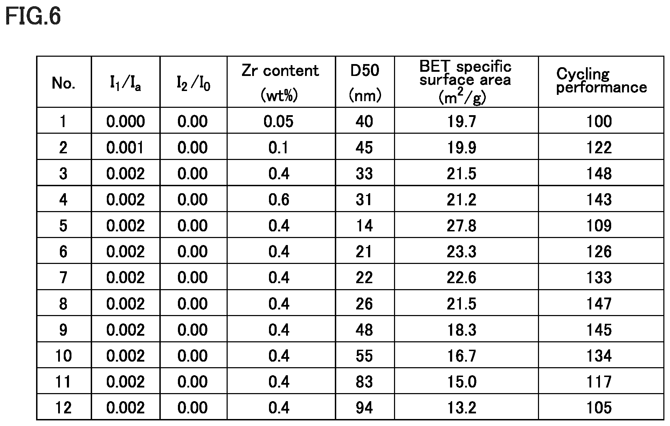

Manganese sulfate pentahydrate and water were mixed together, and thereby a 1-mol/L. manganese sulfate aqueous solution was prepared. The resulting manganese sulfate aqueous solution was added into a tank and subjected to $CO_2$ bubbling, and thereby a manganese carbonate aqueous solution was prepared. The manganese carbonate aqueous solution was subjected to wet grinding in a bead mill. For the bead mill, $ZrO_2$ beads (manufactured by NIKKATO, YTZ series zirconia beads) were used. At this time, the manganese carbonate aqueous solution was circulated between inside the grinding chamber of the bead mill, and inside the tank for $CO_2$ bubbling. The amount of $CO_2$ supply into the tank was 0.5 L/minute per 1 L of the capacity of the tank, and bubbling and stirring were carried out continuously in the tank. For avoiding $CO_2$ from entering into the grinding chamber, bubbling was carried out with the tank hermetically sealed and with deaeration being performed using a diaphragm pump to achieve 20 kPa. Bubbling and stirring in the tank as well as wet grinding in the grinding chamber were repeated, and thereby a first slurry was formed. This step was implemented for the period of time specified in Fig. 5. The D50 of manganese carbonate in the first slurry was as shown in Fig. 6. The solid concentration of the first slurry in mass fraction was 40%.

(b) Second Grinding Step

Lithium phosphate, ferric phosphate, and water were mixed together, and thereby a second slurry was formed. The solid concentration of the second slurry in mass fraction was 30%. The first slurry and the second slurry were mixed together, and 85% phosphoric acid aqueous solution was added thereto with stirring, followed by wet grinding in a vacuum in a bead mill, and thereby a third slurry was formed. This step was implemented for the period of time specified in Fig. 5. The D50 of the solid matter in the third slurry was as shown in Fig. 5.

(c) Stirring Step

The resulting third slurry was subjected to $CO_2$ bubbling with stirring, and thereby a fourth slurry was obtained. This step was implemented for 2 hours. The D50 of the solid matter in the fourth slurry was as shown in Fig. 5.

(d) First Granulation Step

The fourth slurry was subjected to spray pyrolysis in a nitrogen gas atmosphere in a spray pyrolysis apparatus, and thereby first precursor particles were obtained. In the spray pyrolysis apparatus, the fourth slurry passed the drying furnace and the pyrolysis furnace in this order. The temperature in the drying furnace was 300°C, and the temperature in the pyrolysis furnace and the spray rate were as shown in Fig. 5.

(e) Hydrothermal Treatment Step

The first precursor particles thus obtained, lithium hydroxide, glucose, and water were mixed together to form a fifth slurry. The amount of lithium hydroxide to be added relative to the mass of the first precursor particles was 5%. The solid concentration of the fifth slurry in mass fraction was 20%. The fifth slurry was subjected to hydrothermal treatment in an autoclave, and thereby second precursor particles were obtained. The hydrothermal treatment was carried out at 200°C for 4 hours.

(f) Second Granulation Step

The fifth slurry including the second precursor particles was spray dried in a nitrogen gas atmosphere in a spray pyrolysis apparatus, and thereby third precursor particles were obtained. This step was carried out in the same spray pyrolysis apparatus under the same conditions as in the (d) step above.

(g) Calcination Step

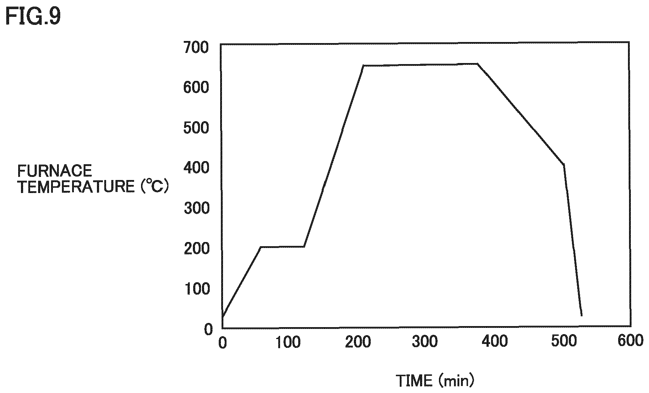

The third precursor particles were calcined in a nitrogen gas atmosphere, and thereby a positive electrode active material (LMFP) was synthesized. Fig. 9 is a temperature profile during calcination. Firstly, the furnace temperature is raised at a temperature raising rate of 5°C/minute to reach 200°C. The furnace temperature is maintained at 200°C for 1 hour. Then, the furnace temperature is raised at a temperature raising rate of 5°C/minute to reach 650°C. The furnace temperature is maintained at 650°C for 3 hours. Subsequently, the furnace temperature is lowered at a temperature lowering rate of 2°C/minute to reach 400°C. Furthermore, the furnace temperature is lowered at a temperature lowering rate of 15°C/minute to reach room temperature.

(No. 2 to No. 12)

Except that the conditions were changed as specified in Fig. 5, the same operation as in No. 1 was carried out to produce positive electrode active materials.

<Evaluation>

(Preparation of Coin Cell)

The positive electrode active material, a conductive material (acetylene black) and a binder (PVdF) were mixed together to form a mixture. The mixing ratio (in mass) was "(positive electrode active material)/(conductive material)/-binder=92/5/3". The mixture was dispersed in a solvent (N-methyl-2-pyrrolidone) to form a paste. The solid concentration of the paste was 50% in mass fraction. The paste was applied to the surface of an Al foil sheet, followed by drying, and thereby a positive electrode layer was formed. The density of the positive electrode layer was adjusted to 1.8 g/cm$^3$ with a roll press, and thereby a positive electrode raw sheet was formed. The positive electrode raw sheet was vacuum dried at 120°C for 12 hours. After drying, the positive electrode raw sheet was die-cut to form a disk-shaped sample (diameter, 14 mm).

Inside a glove box, a coin cell was assembled. The cell configuration is as described below.

Working electrode: Disk-shaped sample (positive electrode)
Counter electrode: Li foil sheet
Separator: Porous polymer film
Electrolyte solution: "EC/DMC=3/7 (in volume)", LiPF$_6$ (1 mol/L) (Measurement)

The $I_1/I_0$, the $I_2/I_0$, the Zr content, the D50 of the primary particles, and the BET specific surface area for each No. shown in Fig. 6 were measured by the methods described above.

(Cycling Performance)

At 25°C, initial charging and discharging was carried out at a constant current. The upper limit to the charging voltage was 4.3 V. The lower limit to the discharging voltage was 3.0 V. At 25°C, at a rate of 0.1 C, pre-cycle discharged capacity was measured. "C" is a symbol denoting a rate of current (an hour rate). At a rate of 1 C, the rated capacity of a battery is charged or discharged in 1 hour. Then, at 60°C, at a rate of 0.1 C, 100 cycles of charge and discharge were carried out. After the 100 cycles, at 25°C, again at a rate of 0.1 C, post-cycle discharged capacity was measured. The post-cycle discharged capacity was divided by the pre-cycle discharged capacity to calculate capacity retention. It is conceivable that the higher the capacity retention is, the better the cycling performance is. Results are shown in Fig. 6. The value of cycling performance in Fig. 6 is a relative value relative to the cycling performance of No. 1, which is defined as 100.

<Results>

Referring to Fig. 6, when the conditions according to the present disclosure are satisfied, cycling performance tends to be improved.

When the positive electrode active material includes Zr in a mass fraction from 0.4% to 0.6%, cycling performance tends to be further improved.

When the D50 of the primary particles is from 20 nm to 90 nm and the BET specific surface area of the positive electrode active material is from 14 m$^2$/g to 26 m$^2$/g, cycling performance tends to be further improved.

<Test Example 2>

<Production of Positive Electrode Active Material>

(No. 13, No. 14)

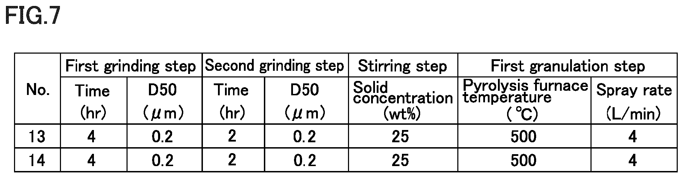

Except that the conditions were changed as specified in Fig. 7, the same operation as in No. 1 was carried out to produce positive electrode active materials. In No. 13, lithium hydroxide was not added in the hydrothermal treatment step (e).

<Evaluation>

(Preparation of Coin Cell)

Under the same conditions as in Test Example 1, a coin cell was assembled.

(Measurement)

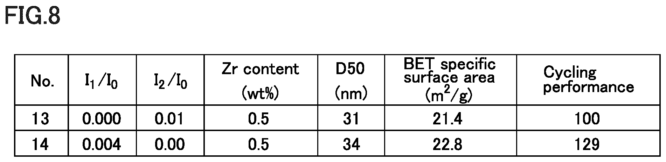

The $I_1/I_0$, the $I_2/I_0$, the Zr content, the D50 of the primary particles, and the BET specific surface area for each No. shown in Fig. 8 were measured by the methods described above.

(Cycling Performance)

Under the same conditions as in Test Example 1, capacity retention was calculated. Results are shown in Fig. 8. The value of cycling performance in Fig. 8 is a relative value relative to the cycling performance of No. 13, which is defined as 100.

<Results>

Referring to Fig. 8, cycling performance of No. 14 where the relationships of $0.001 \leq I_1/I_0$ and $I_2/I_0 < 0.01$ were satisfied was higher than the cycling performance of No. 13 where these relationships were not satisfied.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

**Claims**

1. A positive electrode active material comprising:

    secondary particles (2), wherein
    each of the secondary particles includes primary particles (1), and
    each of the primary particles includes an olivine-type phosphate compound and lithium zirconate.

2. The positive electrode active material according to claim 1, wherein a relationship of $0.001 \leq I_1/I_0$ is satisfied, where

    $I_0$ represents a height of a main peak among all peaks attributable to an olivine-type structure in an XRD profile of the positive electrode active material, and
    $I_1$ represents a height of a peak attributable to lithium zirconate in the XRD profile of the positive electrode active material.

3. The positive electrode active material according to claim 2, wherein a relationship of $I_2/I_0 < 0.01$ is satisfied, where $I_2$ represents a height of a peak attributable to zirconia in the XRD profile of the positive electrode active material.

4. The positive electrode active material according to claim 1, wherein zirconium is included in a mass fraction from 0.1% to 0.8%.

5. The positive electrode active material according to claim 1, wherein an average particle size of the primary particles (1) is from 20 nm to 90 nm.

6. The positive electrode active material according to claim 1, wherein a BET specific surface area of the positive electrode active material is from 14 $m^2/g$ to 26 $m^2/g$.

7. The positive electrode active material according to claim 1, wherein the olivine-type phosphate compound is lithium manganese iron phosphate.

8. A battery comprising the positive electrode active material according to any one of claims 1 to 7.

9. The battery according to claim 8, having a bipolar structure.

10. A method of producing a positive electrode active material, the method comprising:

(a) wet grinding a manganese carbonate aqueous solution in a vacuum to form a first slurry, where the manganese carbonate aqueous solution is obtained by bubbling carbon dioxide into an aqueous solution obtained by mixing a manganese compound and a first solvent;
(b) wet grinding a mixture of a second slurry, the first slurry, and a phosphate compound, in a vacuum to form a third slurry, where the second slurry is obtained by mixing a first lithium compound and a second solvent;
(c) stirring the third slurry while bubbling carbon dioxide thereinto to form a fourth slurry;
(d) forming first precursor particles by spray pyrolysis of the fourth slurry;
(e) performing hydrothermal treatment of a fifth slurry to form second precursor particles, where the fifth slurry is obtained by mixing the first precursor particles, a second lithium compound, and a third solvent;
(f) forming third precursor particles by spray pyrolysis of the second precursor particles; and
(g) performing heat treatment of the third precursor particles to produce an olivine-type phosphate compound,

wherein at least one of the following is satisfied:

(1) in the (a), wet grinding is carried out with a bead mill using zirconium-containing beads;
(2) in the (b), wet grinding is carried out with a bead mill using zirconium-containing beads; and
(3) in the (b), the second slurry is obtained by further mixing zirconium.

11. The method of producing a positive electrode active material according to claim 10, wherein

the (a) is carried out with a circulation mill,
the circulation mill comprises a tank for carbon dioxide bubbling and a grinding chamber, and
the aqueous solution containing the manganese compound circulates between inside the tank and inside the grinding chamber and thereby carbon dioxide bubbling and wet grinding are repeatedly carried out.

FIG.1

FIG.2

```
           ┌──────────────┐
           │    START     │
           └──────┬───────┘
                  │
                  ▼                  a
     ┌────────────────────────────┐
     │    FIRST GRINDING STEP      │
     └─────────────┬──────────────┘
                   │
                   ▼                 b
     ┌────────────────────────────┐
     │   SECOND GRINDING STEP      │
     └─────────────┬──────────────┘
                   │
                   ▼                 c
     ┌────────────────────────────┐
     │       STIRRING STEP         │
     └─────────────┬──────────────┘
                   │
                   ▼                 d
     ┌────────────────────────────┐
     │   FIRST GRANULATION STEP    │
     └─────────────┬──────────────┘
                   │
                   ▼                 e
     ┌────────────────────────────┐
     │       HYDROTHERMAL          │
     │     TREATMENT STEP          │
     └─────────────┬──────────────┘
                   │
                   ▼                 f
     ┌────────────────────────────┐
     │  SECOND GRANULATION STEP    │
     └─────────────┬──────────────┘
                   │
                   ▼                 g
     ┌────────────────────────────┐
     │      CALCINATION STEP       │
     └─────────────┬──────────────┘
                   │
                   ▼
           ┌──────────────┐
           │     END      │
           └──────────────┘
```

FIG.3

## FIG.4

FIG.5

| No. | First grinding step | | Second grinding step | | Stirring step | First granulation step | |
| | Time (hr) | D50 ($\mu$m) | Time (hr) | D50 ($\mu$m) | Solid concentration (wt%) | Pyrolysis furnace temperature (°C) | Spray rate (L/min) |
|---|---|---|---|---|---|---|---|
| 1 | 0.5 | 1 | 1.5 | 0.3 | 25 | 500 | 4 |
| 2 | 1 | 0.3 | 1.5 | 0.3 | 25 | 500 | 4 |
| 3 | 3 | 0.3 | 2 | 0.2 | 25 | 500 | 4 |
| 4 | 6 | 0.1 | 2 | 0.2 | 25 | 500 | 4 |
| 5 | 3 | 0.3 | 3 | 0.1 | 25 | 500 | 4 |
| 6 | 3 | 0.3 | 2 | 0.2 | 20 | 500 | 4 |
| 7 | 3 | 0.3 | 2 | 0.2 | 25 | 450 | 4 |
| 8 | 3 | 0.3 | 2 | 0.2 | 25 | 500 | 6 |
| 9 | 3.5 | 0.2 | 1.5 | 0.3 | 25 | 500 | 4 |
| 10 | 4 | 0.2 | 1 | 0.4 | 25 | 500 | 4 |
| 11 | 4.5 | 0.1 | 0.8 | 0.6 | 25 | 500 | 4 |
| 12 | 5 | 0.1 | 0.5 | 0.9 | 25 | 500 | 4 |

FIG.6

| No. | $I_1/I_a$ | $I_2/I_0$ | Zr content (wt%) | D50 (nm) | BET specific surface area $(m^2/g)$ | Cycling performance |
|---|---|---|---|---|---|---|
| 1 | 0.000 | 0.00 | 0.05 | 40 | 19.7 | 100 |
| 2 | 0.001 | 0.00 | 0.1 | 45 | 19.9 | 122 |
| 3 | 0.002 | 0.00 | 0.4 | 33 | 21.5 | 148 |
| 4 | 0.002 | 0.00 | 0.6 | 31 | 21.2 | 143 |
| 5 | 0.002 | 0.00 | 0.4 | 14 | 27.8 | 109 |
| 6 | 0.002 | 0.00 | 0.4 | 21 | 23.3 | 126 |
| 7 | 0.002 | 0.00 | 0.4 | 22 | 22.6 | 133 |
| 8 | 0.002 | 0.00 | 0.4 | 26 | 21.5 | 147 |
| 9 | 0.002 | 0.00 | 0.4 | 48 | 18.3 | 145 |
| 10 | 0.002 | 0.00 | 0.4 | 55 | 16.7 | 134 |
| 11 | 0.002 | 0.00 | 0.4 | 83 | 15.0 | 117 |
| 12 | 0.002 | 0.00 | 0.4 | 94 | 13.2 | 105 |

FIG.7

| No. | First grinding step | | Second grinding step | | Stirring step | First granulation step | |
| --- | --- | --- | --- | --- | --- | --- | --- |
| | Time (hr) | D50 ($\mu$m) | Time (hr) | D50 ($\mu$m) | Solid concentration (wt%) | Pyrolysis furnace temperature (℃) | Spray rate (L/min) |
| 13 | 4 | 0.2 | 2 | 0.2 | 25 | 500 | 4 |
| 14 | 4 | 0.2 | 2 | 0.2 | 25 | 500 | 4 |

FIG.8

| No. | $I_1/I_0$ | $I_2/I_0$ | Zr content (wt%) | D50 (nm) | BET specific surface area $(m^2/g)$ | Cycling performance |
|-----|-----------|-----------|------------------|----------|--------------------------------------|---------------------|
| 13 | 0.000 | 0.01 | 0.5 | 31 | 21.4 | 100 |
| 14 | 0.004 | 0.00 | 0.5 | 34 | 22.8 | 129 |

FIG.9

Europäisches
Patentamt
European
Patent Office
Office européen
des brevets

# EUROPEAN SEARCH REPORT

**Application Number**

EP 25 20 1664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG BAOQUAN ET AL: "Enhancement of Li 2 ZrO 3 Modification of the Cycle Life of N/S-Doped LiMn 0.5 Fe 0.5 PO 4 /C Composite Cathodes for Lithium Ion Batteries", LANGMUIR, vol. 39, no. 14, 27 March 2023 (2023-03-27), pages 5187-5198, XP093343703, ISSN: 0743-7463, DOI: 10.1021/acs.langmuir.3c00244 * the whole document * * page 5188, column 1, lines 28-31 * * page 5189, column 2, lines 7-10 * * page 5190; table 2 * * page 5189, column 2, lines 15-19 * * Introduction; page 5187 * | 1-9 | INV. H01M10/0525 H01M4/485 H01M10/052 H01M4/58 H01M4/02 C01B25/45 C01F5/00 C01G25/00 C01D15/00 |
| X | JP 2018 041719 A (SUMITOMO OSAKA CEMENT CO LTD) 15 March 2018 (2018-03-15) * paragraphs [0045] - [0046] * | 10,11 | |

-----

-----

**TECHNICAL FIELDS SEARCHED (IPC)**

H01M
C01G

The present search report has been drawn up for all claims

| Place of search | Date of completion of the search | Examiner |
|---|---|---|
| The Hague | 17 December 2025 | Moussa, Chantal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 1664

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | Publication date | Patent family member(s) | | Publication date |
|---|---|---|---|---|
| JP 2018041719 A | 15-03-2018 | JP | 6354895 B2 | 11-07-2018 |
| | | JP | 2018041719 A | 15-03-2018 |
| | | US | 2018062165 A1 | 01-03-2018 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024175765 A

- JP 2022522559 A